# FASCICULE DE BREVET EUROPEEN

(11) **EP 2 292 481 B1**
(45) Date de publication et mention de la délivrance du brevet: **01.05.2013**
(21) Numéro de dépôt: 10290367.1
(22) Date de dépôt: 01.07.2010
(51) Int. Cl.: B60T 3/00

(54) **Cale pour camion et son moyen de logement**
LKW-Unterlegekeil und -Lagerungsanordnung
Lorry wheel chock and its storage device

(30) Priorité: 20.08.2009 FR 0904012
(43) Date de publication de la demande: 09.03.2011
(73) Titulaire: Expresso France Sarl, 67319 Wasselonne (FR)
(72) Inventeur: Roere, Michel, 67720 Weyersheim (FR); Valentin, Guy, 67319 Wasselonne (FR)
(74) Mandataire: Munier, Laurent

(56) Documents cités:
- WO-A1-2007/118433
- CN-Y- 2 688 563
- CN-Y- 201 240 366
- FR-A1- 2 873 351
- US-A1- 2008 230 329

## Description

La présente invention concerne le calage des camions pour permettre le transbordement des marchandises.

En premier lieu, l'invention se rapporte à une cale comprenant au moins une face inférieure destinée à l'appui sur le sol, une face avant sensiblement concave destinée au contact en butée d'une roue de camion, une face arrière et deux faces latérales destinées à rigidifier ladite cale et maintenir l'angle aigu formé entre la face d'appui et la face avant.

Le document W2007/118433 A1 décrit un moyen de verrouillage de véhicule. Il s'agit d'un sabot pour empêcher qu'un véhicule arrêté ne reparte. Ce sabot ne s'adresse pas spécifiquement à des camions, ni même n'est adapté au transbordement de marchandise. La fonction du sabot connu n'a rien à voir avec l'invention puisqu'il s'agit d'empêcher qu'un conducteur ne reparte.

Le sabot décrit ne comporte pas de moyens de signalétique car il n'a pas pour but de placer un camion à un positionnement rigoureux empêchant la chute des chariots transbordeurs lorsqu'ils quittent ou montent sur le camion.

Par contraste au sabot connu la cale selon l'invention arrête un camion qui roule à un l'emplacement nécessaire au transbordement.

Pour le transbordement des marchandises, le camion doit se positionner précisément par rapport au quai de déchargement et être maintenu arrêté à l'endroit permettant le transbordement, c'est la fonction de la cale. Quand le chargement ou le déchargement est terminé le conducteur redémarre et le camion s'en va. Le sabot connu a pour but d'empêcher le véhicule de repartir et non de le positionner à un emplacement précis pour permettre un travail spécifique sans accident, pas de chute entre le quai et le camion, pas de choc trop violent du camion sur le quai, emplacement correspondant aux portes, etc.

Le document FR 2 873 351 A1 décrit un moyen de calage de roues. Mais c'est un moyen d'empattement d'avion par rapport à son train d'atterrissage. Ainsi, l'homme du métier n'imaginera pas qu'il apporte une solution au problème technique de l'invention.

En effet, ce calage connu n'a rien à voir avec un butoir pour camion et une signalétique de positionnement de camion pour son chargement ou déchargement

En outre un problème technique résulte du fait que les camions sont de différentes tailles, avec des grandes ou des petites roues, et des structures de châssis, pourvues de garde boue ou non, descendant plus ou moins bas.

Pour caler les camions, il a été conçu des cales dites classiques aux dimensions, notamment en hauteur, suffisantes pour ne pas être franchies facilement.

Un autre problème s'est posé pour ces cales dites classiques, les camions, notamment ceux à petites et moyennes roues, présentent des structures de châssis, pourvues de garde boue ou non, descendant plus ou moins bas. Ces structures empêchent la mise en place des cales dites classiques.

Alors, il a été proposé des jeux comprenant une grande et une petite cale. Cette proposition, outre son aspect économique, à fait apparaître une confusion possible dans le choix de la cale, grande ou petite. La petite étant plus facile à mettre en oeuvre, les utilisateurs risquent de n'utiliser que celle-ci, alors que pour des raisons de sécurité maximum la cale de grande hauteur, dite classique, est mieux adaptée aux roues grandes, les roues moyennes pouvant être utilisées avec des modèles de cale plus petite.

L'invention a pour but de surmonter ces inconvénients en proposant une cale universelle qui s'adapte à tous les camions en circulation et quelque soit l'encombrement de leur carénage.

Pour cela, la cale dite universelle, selon l'invention, comporte au sommet un moyen rehausseur mobile et solidaire.

Suivant d'autres caractéristiques de la cale dite universelle selon la présente invention :
- elle comporte un moyen de détection de roue sur sa face avant, typiquement un moyen de détection mécanique présentant au moins une languette métallique sortant de ladite face, ledit moyen de détection actionnant un émetteur relié, par des moyens hertziens ou filaire à des moyens d' asservissement pour la gestion de feux de signalisation et/ou autres matériels.
- Le moyen rehausseur est pivotant vers la face avant de manière à ce qu'en position haute il arrête une grande roue de camion, en position basse apte à passer sous les carénages des camions à châssis bas, il arrête les petites et moyennes roues de camion et maintient les grandes roues de camions éloignée du moyen de détection annulant de fait la possibilité d'asservissement, avec des feux ou empêchant le fonctionnement de matériels, genre niveleur de quais et/ou autres. Ce dispositif, obligeant les utilisateurs à se servir du rehausseur mobile en position haute.

Pendant le calage, les camions se posent sur la cale et emprisonnent celle-ci sur le sol. Il devient très difficile de la dégager. Dans ce but, la cale dite universelle, selon l'invention peut comprendre un moyen de dégagement de la roue, ledit moyen de dégagement comprenant au moins une première tige de transmission et/ou multiplication de force reliée à une tige excentrique liée à au moins une des deux faces latérales de la dite cale universelle.

Suivant une autre caractéristique de la dite cale universelle, selon l'invention, elle est munie sur la plaque en contact avec le sol, de taquets amovibles ou non, pouvant s'encastrer dans les rainures d'une grille posée et fixée au sol. Ce dispositif empêche le glissement de la dite cale universelle sur le sol, donnant ainsi à la dite cale universelle un maximum d'efficacité. Le moyen de dégagement cité ci-dessus, permet en soulevant en partie, la face de la dite cale universelle au contact avec le sol, de dégager facilement la dite cale universelle de dessous la roue.

Suivant une autre caractéristique de la dite cale universelle, selon l'invention, le moyen de dégagement comprend des moyens de déplacement, en particulier une poignée disposée à l'extrémité extérieure de la première tige et/ou au moins une roue d'axe située au niveau de la liaison entre la première et la deuxième tige.

L'invention concerne également un moyen de logement d'une cale pouvant être conforme à celle décrite ci-dessus.

Ce moyen de logement comporte au moins un moyen de contrôle de la présence de la cale, et au moins un moyen de retenue de la dite cale, par transfert de clé, de jeton ou autres et au moins un moyen de signalisation clignotant ou non.

Ce moyen de logement peut être rehaussé d'un système de feux, soit au moins un feu rouge et au moins un feu vert.

Suivant une autre caractéristique de ladite cale universelle, selon l'invention, le moyen de déplacement est muni d'un dispositif dit prisonnier, qui sera enclenché dans le dispositif de retenue du moyen de logement. Ce dispositif dit prisonnier sera libéré par l'introduction d'une clé, d'un jeton ou autre, donné par l'exploitant du site de chargement. Cette clé, jeton ou autre devra être rendue, après le rangement de la cale, en échange d'une pièce d'importance appartenant au chauffeur du véhicule chargé.

L'invention sera mieux comprise à la lecture des dessins donnés à titre d'exemple non limitatif sur lesquels :
- La figure 1 représente la cale selon l'invention en perspective avec un moyen de détection à languette métallique et un moyen rehausseur pivotant en position basse.
- La figure 2 représente la cale de la figure 1, vue de dessus.
- La figure 3 représente la cale des figures 1 et 2, vue d'avant.
- La figure 4 représente la cale des figures 1, 2 et 3, vue d'arrière.
- La figure 5 représente la cale des figures 1, 2, 3 et 4, vue de côté.
- La figure 5.1 représente la cale des figures 1,2,3,4 et 5 vue de coté pour bien montrer sa réversibilité
- La figure 6 représente la cale 1 selon l'invention en perspective avec un moyen de détection à languette métallique et un moyen rehausseur pivotant en position haute
- La figure 7 représente la cale de la figure 6, vue de dessus.
- La figure 8 représente la cale des figures 6 et 7, vue d'avant.
- La figure 9 représente la cale des figures 6,7 et 8, vue de d'arrière.
- La figure 10 représente la cale des figures 6,7,8 et 9, vue de coté.
- La figure 11 représente la cale selon l'invention en perspective avec un moyen de détection à languette métallique, un moyen rehausseur pivotant en position haute et un moyen de déplacement
- La figure 12 représente la cale selon l'invention en perspective avec un moyen de détection à languette métallique, un moyen rehausseur pivotant en position basse et un moyen de déplacement
- La figure 13 représente la cale selon l'invention en vue de coté avec un moyen de détection à languette métallique, un moyen rehausseur pivotant en position haute et un moyen de déplacement associé à une roue de grand diamètre
- La figure 14 représente la cale selon l'invention en vue de coté avec un moyen de détection à languette métallique, un moyen rehausseur pivotant en position basse et un moyen de déplacement, associé à une roue de grand diamètre.
- La figure 15 . représente la cale selon l'invention en vue de coté avec un moyen de détection à languette métallique, un moyen rehausseur pivotant en position basse , un moyen de déplacement associé à une roue de diamètre moyen et la représentation des structures basses d'un véhicule. La figure 15 démontre bien de la nécessité de basculer le rehausseur pour permettre le passage de la cale, premièrement sous la structure du camion et deuxièmement sous la roue la roue du véhicule.
- La figure 16 représente la cale selon l'invention en vue de côté avec un moyen de détection à languette métallique, un moyen rehausseur pivotant en position haute et un moyen de déplacement associé à une roue de diamètre moyen
- La figure 17 représente la cale selon l'invention en vue de côté avec un moyen de détection à languette métallique, un moyen rehausseur pivotant en position basse, un moyen de déplacement associé à une roue de petit diamètre et la représentation des structures basses d'un véhicule.
- La figure 18 représente la cale selon l'invention en perspective, avec un moyen de détection à languette métallique, un moyen rehausseur pivotant en position haute , un moyen de déplacement associé à une roue de petit diamètre et la représentation des structures basses d'un véhicule. La figure 18 démontre de l'impossibilité de mettre la cale sous la roue du véhicule
- La figure 20 représente la dite cale universelle en position de dégagement posée au sol
- La figure 21 représente la dite cale en position de dégagement posée sur une grille de maintien
- La figure 22 représente le détail du système de dégagement
- La figure 23 représente en perspective un moyen de logement, la cale dite universelle avec son moyen de déplacement et son système dit prisonnier, le feu clignotant ou non, le moyen de retenue, avec quelques exemples de moyen d'activation ou de désactivation et les feux de signalisation déportés

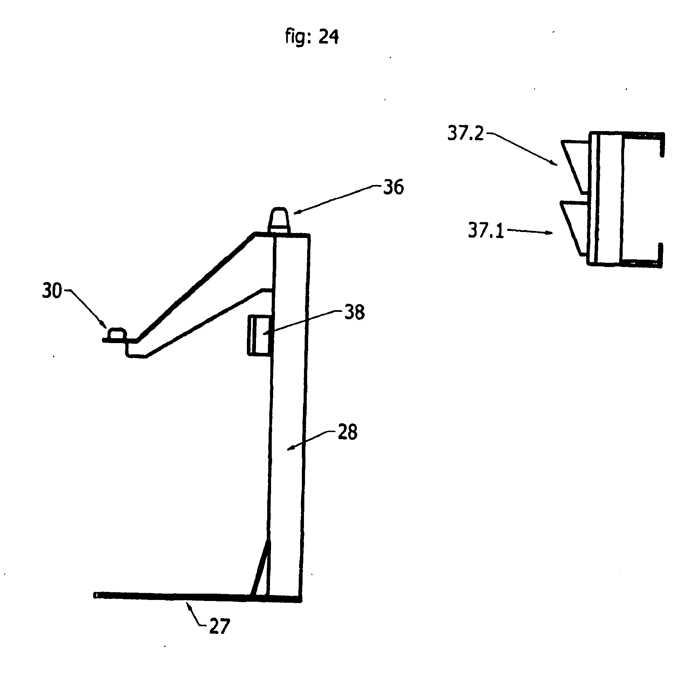

- La figure 24 représente en vue de coté le moyen de logement, le moyen de retenue, le feu clignotant ou non, la boite de raccordement électrique et les feux de signalisation déportés

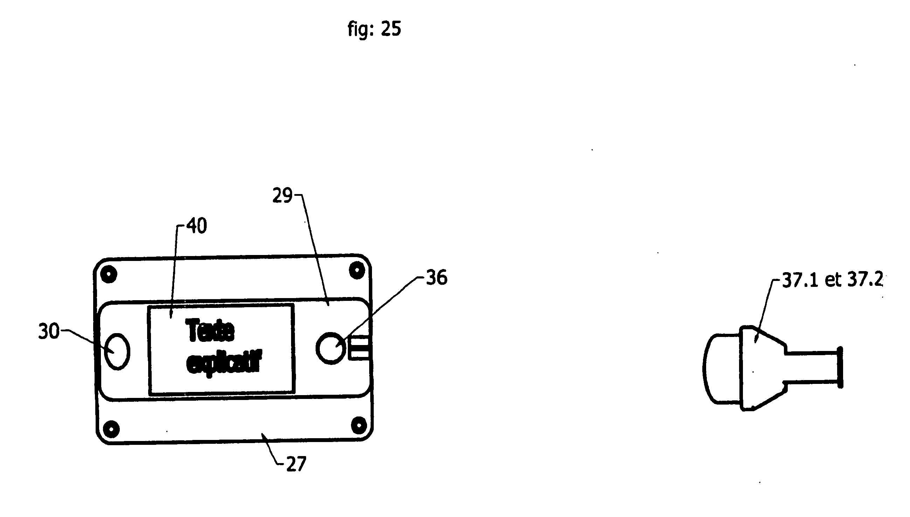

- La figure 25 représente en vue de dessus le moyen de logement, le moyen de retenue, le feu clignotant ou non, la boite de raccordement électrique et les feux de signalisation déportés

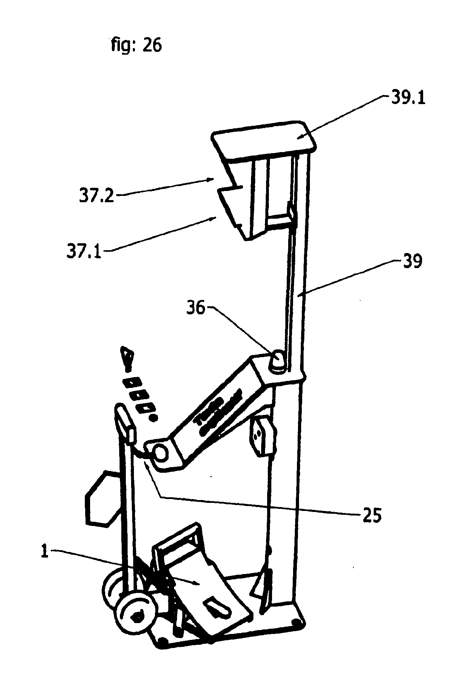

- La figure 26 représente en perspective le moyen de logement, le moyen de retenue, le feu clignotant ou non, la boite de raccordement électrique et son système de feux de signalisation amovible 39 à 39.1.

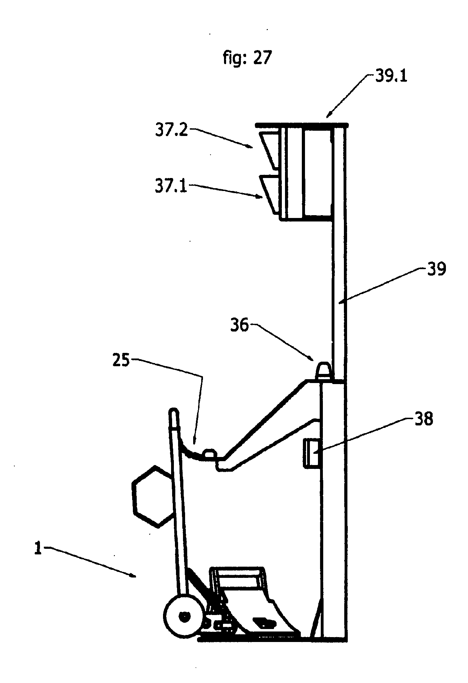

- La figure 27 représente en vue de coté le moyen de logement, le moyen de retenue, le feu clignotant ou non, la boite de raccordement électrique et son système de feux de signalisation amovible

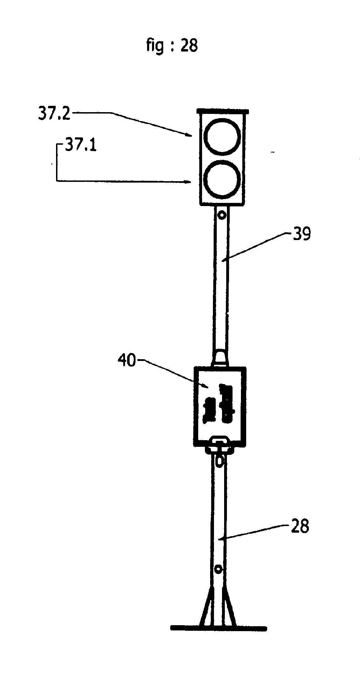

- La figure 28 représente en vue de face le moyen de logement, le moyen de retenue, le feu clignotant ou non, la boite de raccordement électrique et son système de feux de signalisation amovible.

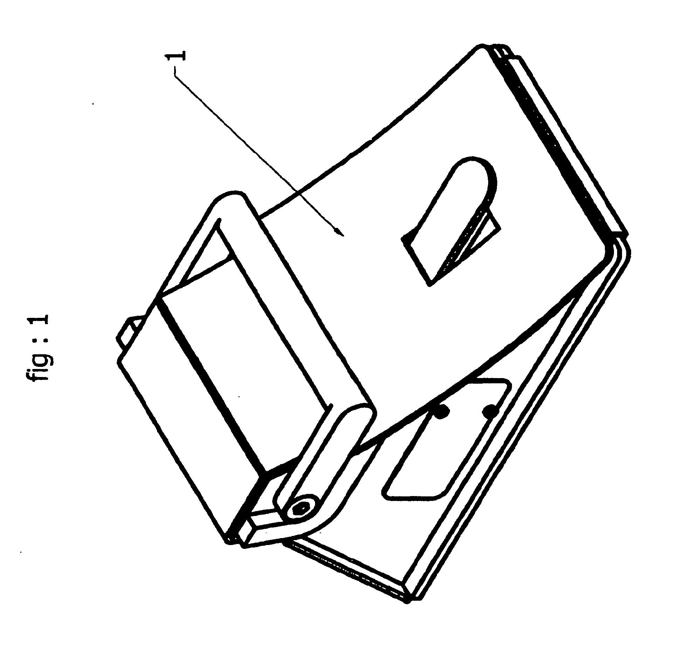

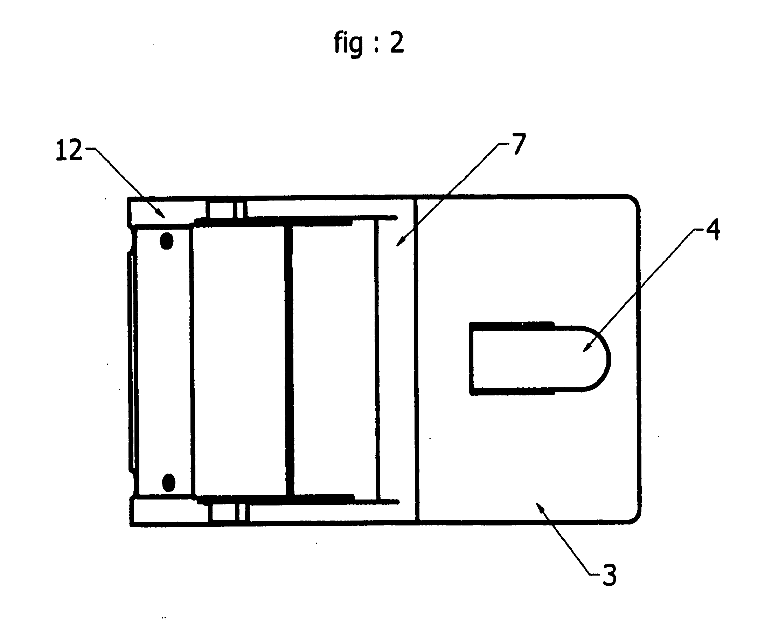

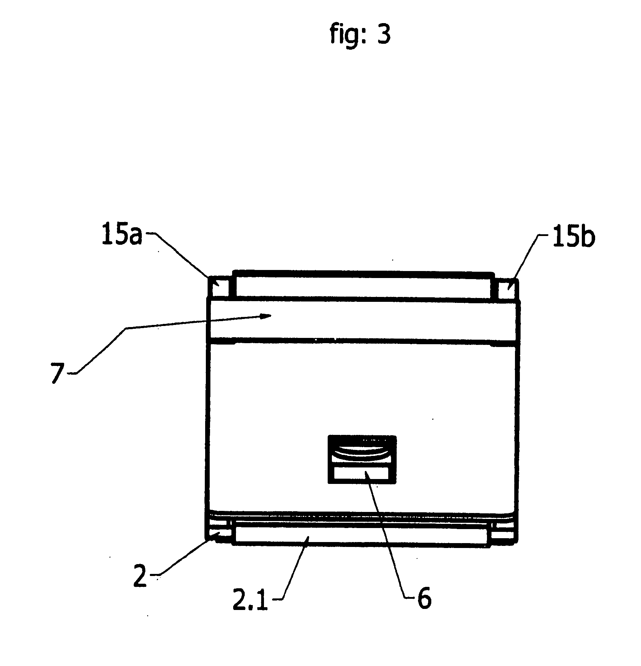

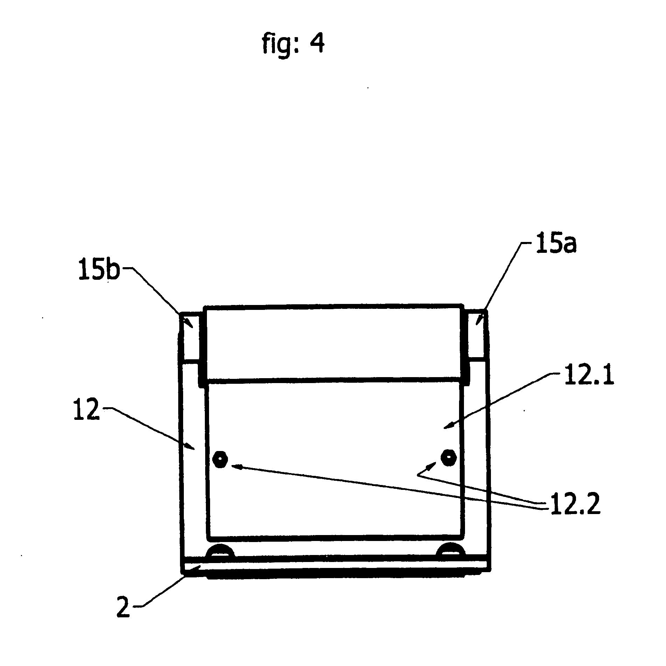

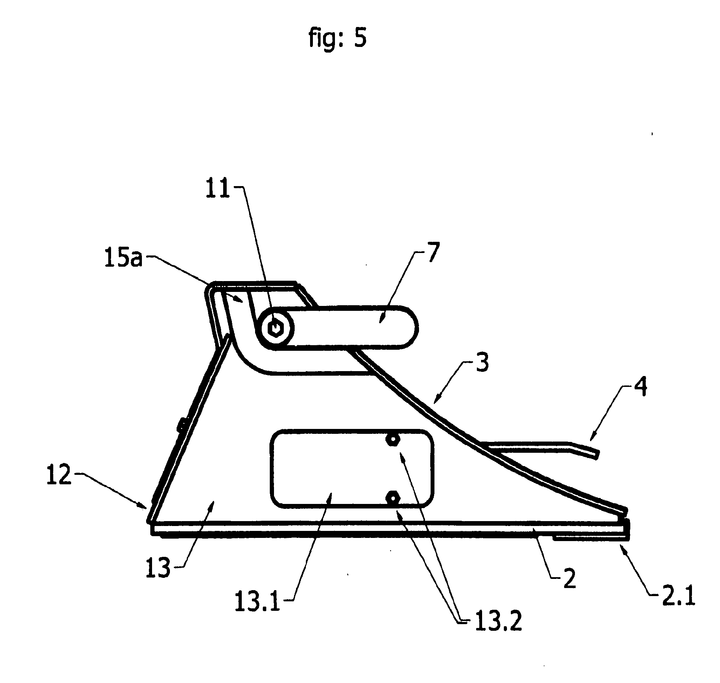

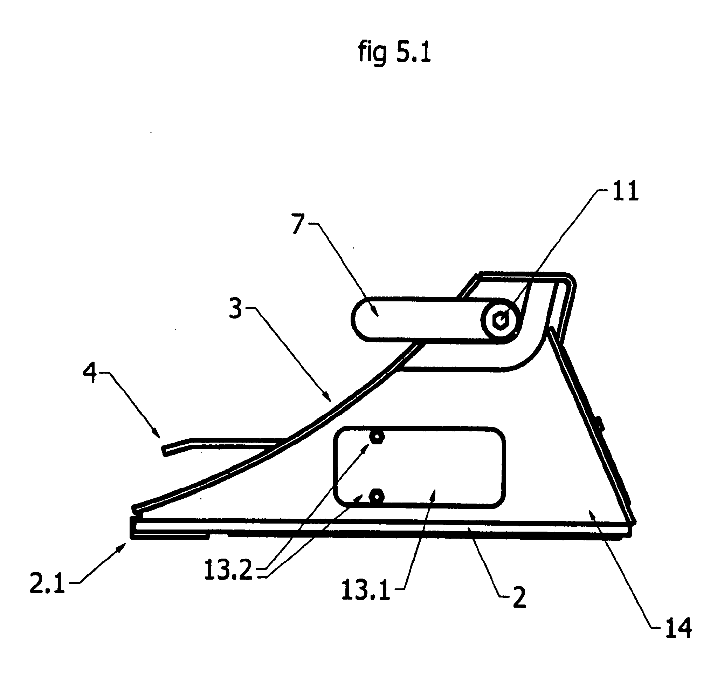

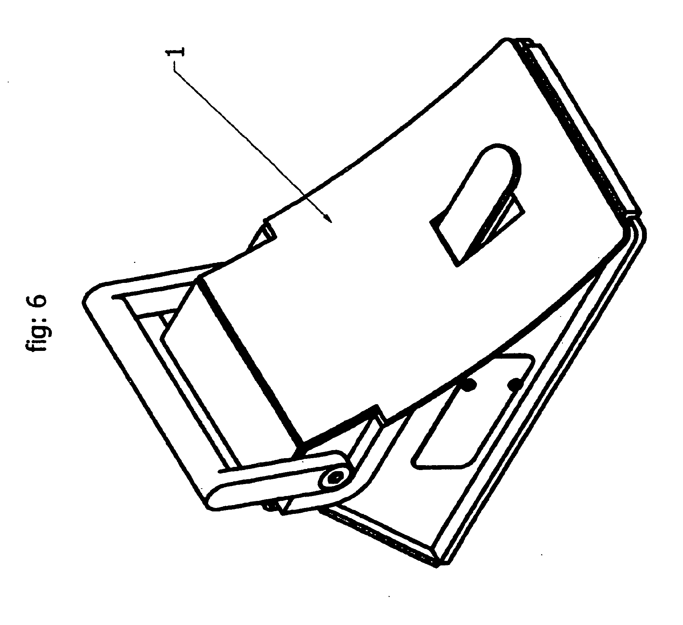

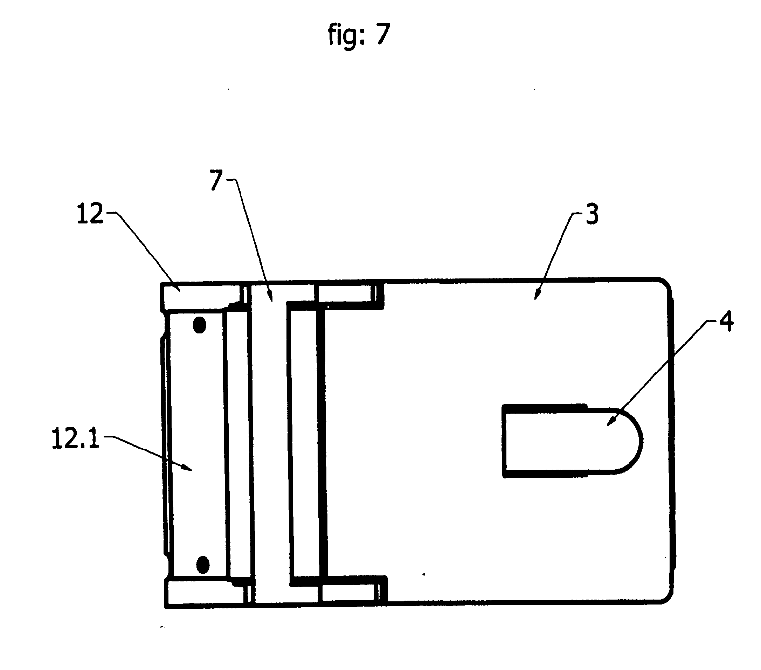

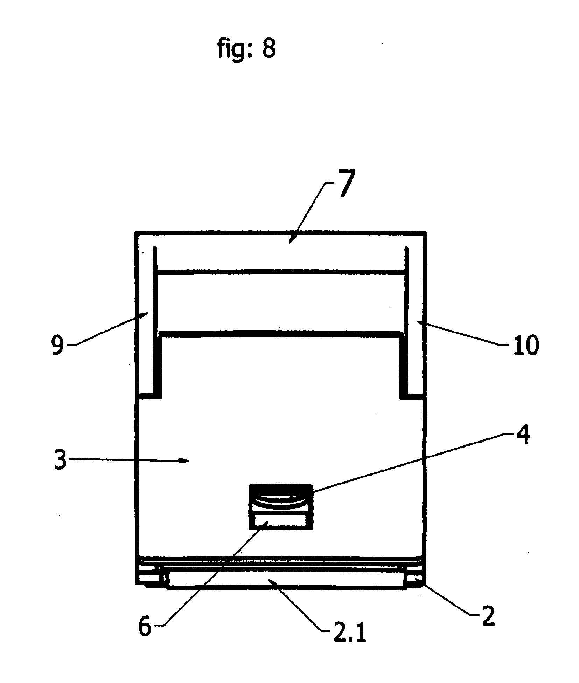

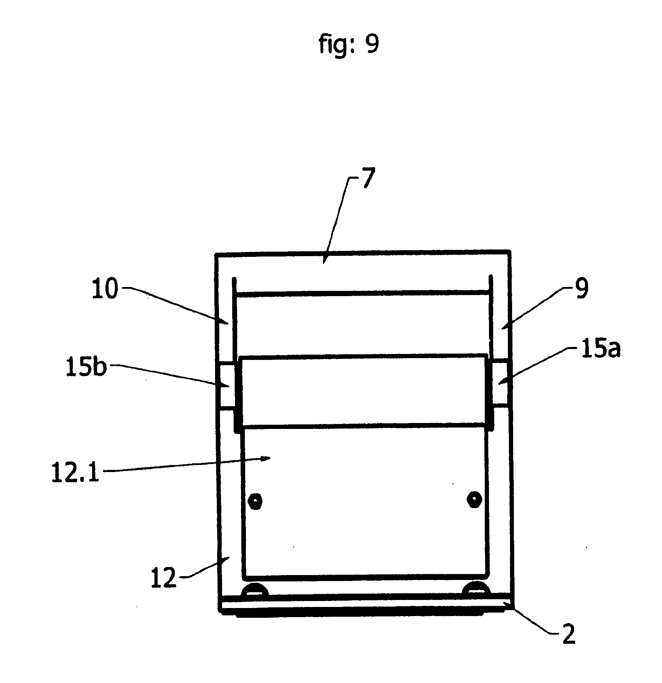

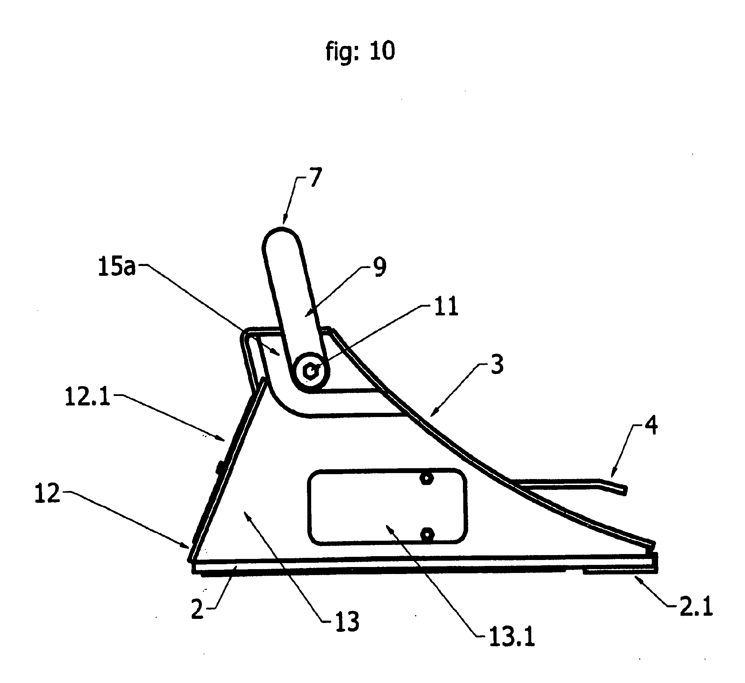

La cale 1 représentée sur les figures 1 à10 comprend une face inférieure 2 ou de base d'une longueur de près de 395 mm. Cette face inférieure 2 représente la plus grande longueur de la cale 1 et est destinée à l'appui sur le sol, son adhérence est améliorée par la présence d'une plaque caoutchoutée 2.1 sur la partie située vers l'avant de la cale 1. La cale 1 comprend encore une face avant 3 sensiblement concave. Cette face avant 3 est destinée au contact d'une roue de camion.

La cale comprenant un moyen mécanique de détection de roue sensiblement au tiers de la hauteur en position basse une languette métallique 4 dépasse de la face avant 3. Le mécanisme 5 du moyen de détection étant logé dans la cale 1, une ouverture 6 permet le passage de la languette métallique 4. La hauteur totale de la cale 1 est variable car déterminée en partie haute par un moyen rehausseur 7 pouvant pivoter de la position basse vers le haut ou de la position haute vers le bas. Le moyen rehausseur 7 comprend un rond 8 d'appui de roues de longueur l correspondant à la largeur de la cale 1 relié à chaque extrémité par deux montants 9, 10 à un axe de pivotement 11 placé en haut de la cale 1. Cette cale 1 comprend encore une face arrière 12 légèrement inclinée par rapport à la verticale comportant une ouverture d'accès au système de détection. Cette face arrière 12 et fermée par une plaque amovible 12.1 et maintenue par deux vis 12.2. Cette cale1 comprend deux faces latérales 13, 14 destinées à maintenir l'angle aigu formé entre la face d'appui 2 et la face avant 3. Ces deux faces 13,14 peuvent être équipées, suivant les options adjointes de plaques d'obstruction 13.1 maintenues par des vis 13.2.

Une autre particularité de la cale 1 dite universelle est d'être réversible, c'est-à-dire de pouvoir être employée aussi bien du coté gauche que du coté droit, lorsqu'elle est équipée de son moyen de déplacement.

En partie haute, les faces latérales 13, 14 présentent chacune un relief 15a, 15b. Ce relief à l'arrière est montant suivant un angle ... plus fermé par rapport à la verticale que celui de la face avant. En position haute, les montants 9, 10 du moyen rehausseur 7 vont en butée sur l'arrière de ces reliefs 15a, 15b respectivement.

La partie avant des reliefs 15a, 15b est horizontale et se dirige vers la face avant. En position basse, les montants 9, 10 sont respectivement en butée sur la partie horizontale de ces reliefs 15a, 15b.

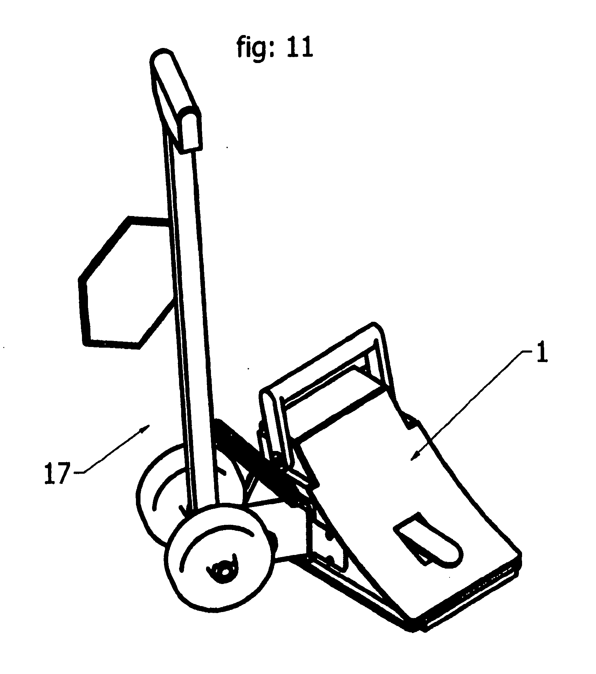

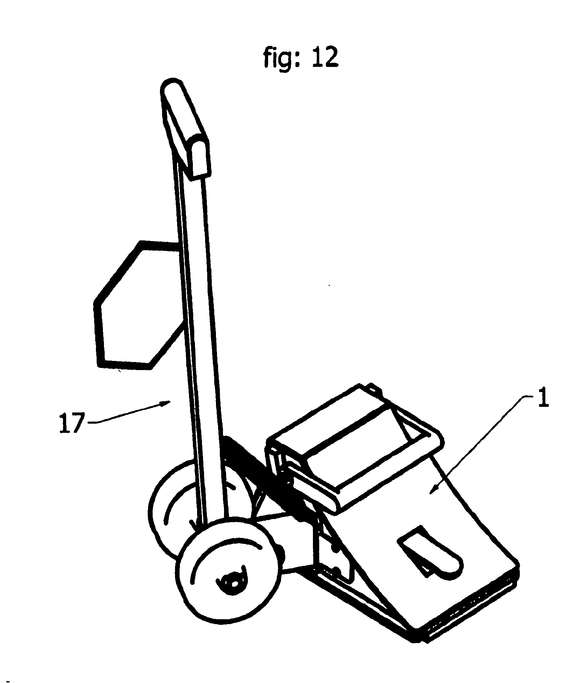

La cale des figures 11 et 12 diffère de la cale des premières figures en ce qu'elle est équipée d'un moyen de déplacement 17, faisant également office de moyen de dégagement.

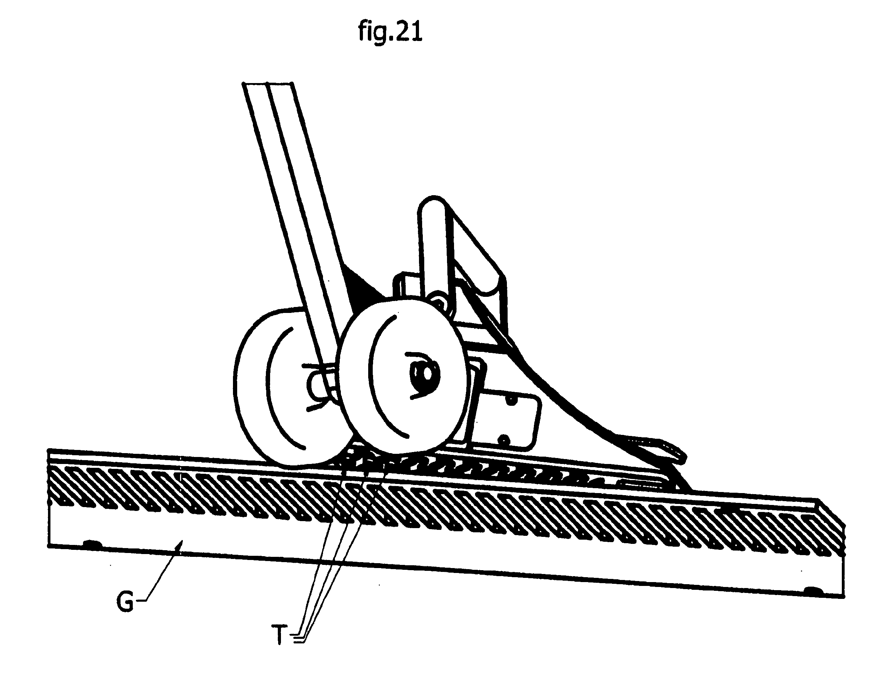

La fonction de dégagement représentée par la fig. 21 fonctionne suivant le principe de levier. Le segment long est composé par la tige en tube 20 fermé en sa partie supérieure par une poignée 21 et en partie basse par une crosse 22 percée à son extrémité visible et incluant l'axe 18 des roues 19.1 et 19.2. La partie visible et percée étant le segment le plus court de notre levier.

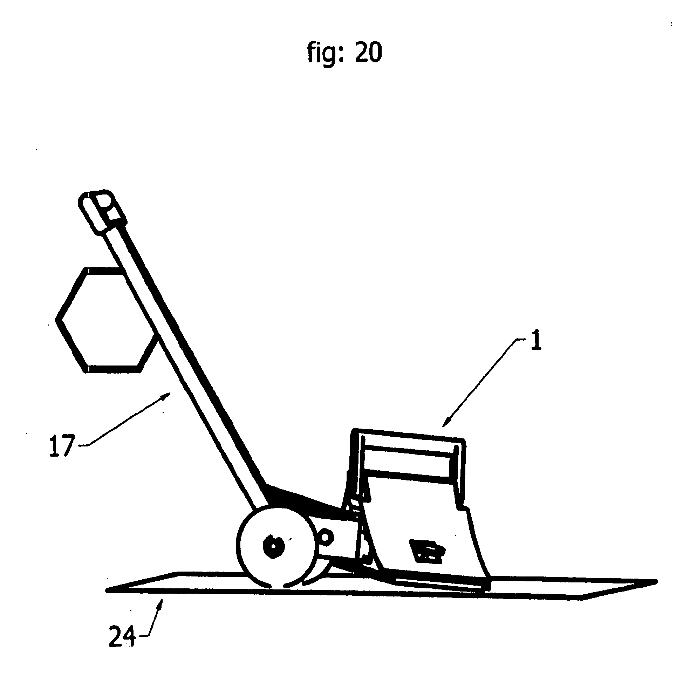

Le perçage de la partie visible de la crosse 22 est reliée par un axe ou boulon à la pièce de liaison 23 avec la cale 1 Quand un camion se repose sur la cale dite universelle, pour dégager cette dernière, l'opérateur tire sur la poignée 21, les roues 19.1 et 19.2 prennent appui sur le sol 24, alors la cale universelle 1 se décolle du sol, comme le représente les figures 20 et 21. Ceci à pour effet de faire glisser la cale 1 vers l'extérieur. L'opération pourra être refaite jusqu'au dégagement complet de la cale dite universelle. L'opérateur peut alors la ranger dans son logement 26.

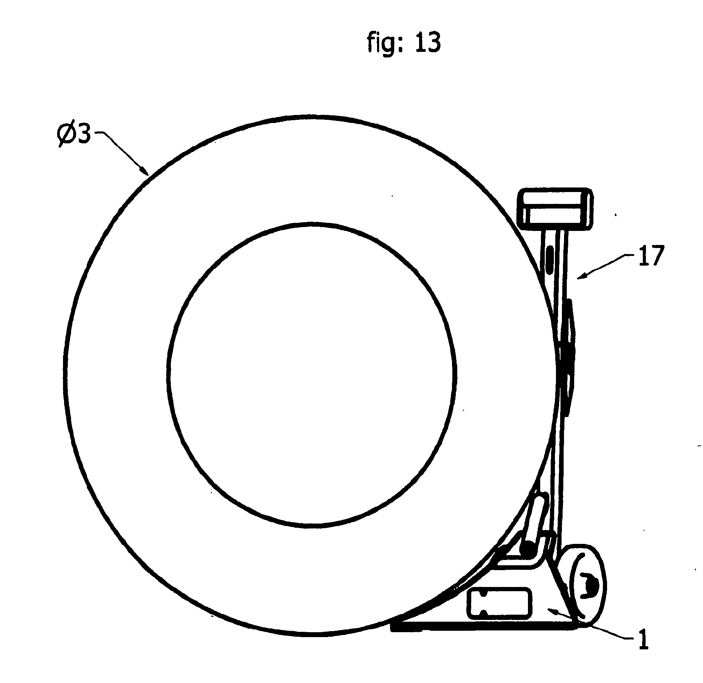

La figure 13 montre l'arrivée d'une roue de grand diamètre 03 dans les bonnes conditions d'utilisation, rehausseur 7 en position haute.

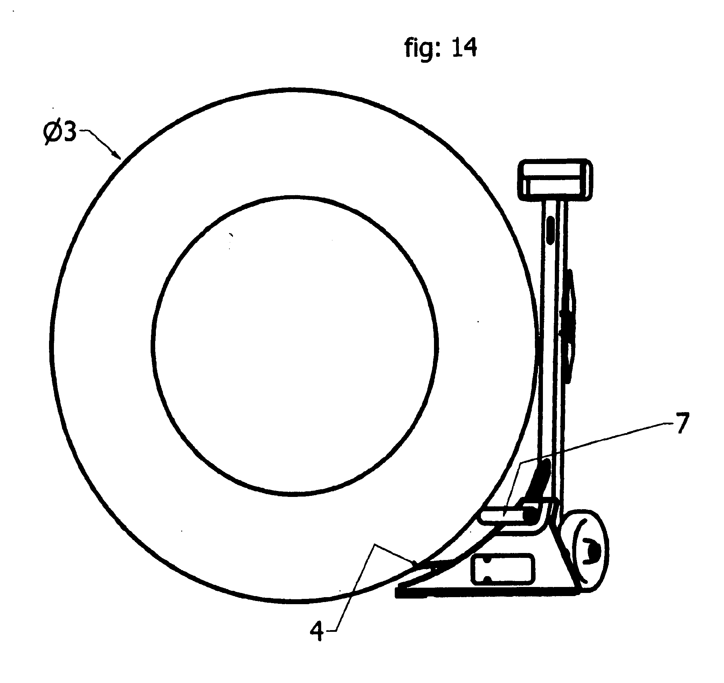

La figure 14 montre l'arrivée d'une roue de grand diamètre 03, le rehausseur 7 en position basse n'empêche pas de placer la cale sous la grande roue, mais l'appui sur la languette 4 du moyen détecteur n'est pas suffisant, obligeant l'opérateur à relever le rehausseur 7 comme cela est présenté figure 13., ceci afin de donner à la cale son maximum d'efficacité.

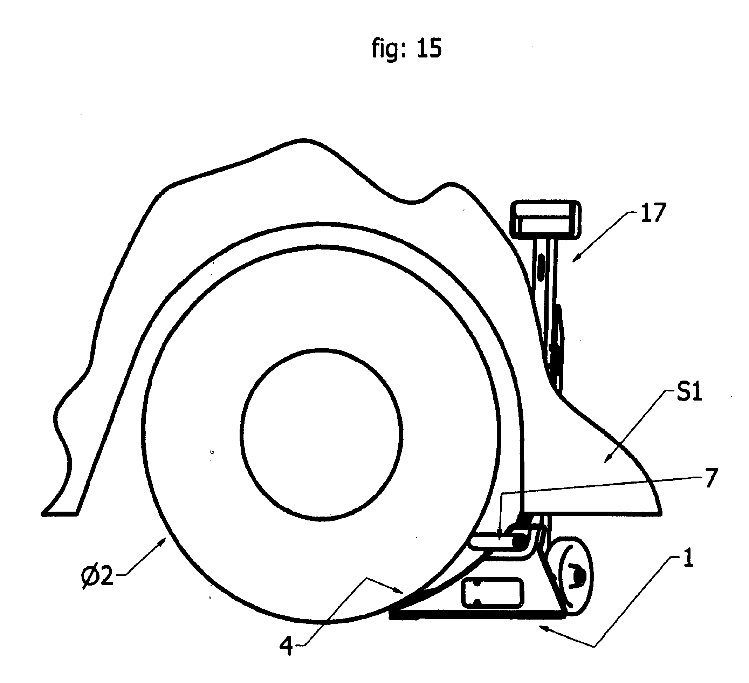

Par contre, l'arrivée d'une roue de diamètre moyen 02 entre en contact avec la languette 4 malgré la présence du rehausseur 7 en position basse, pour cause de structure basse S1, tel que cela est représenté sur la figure 15.

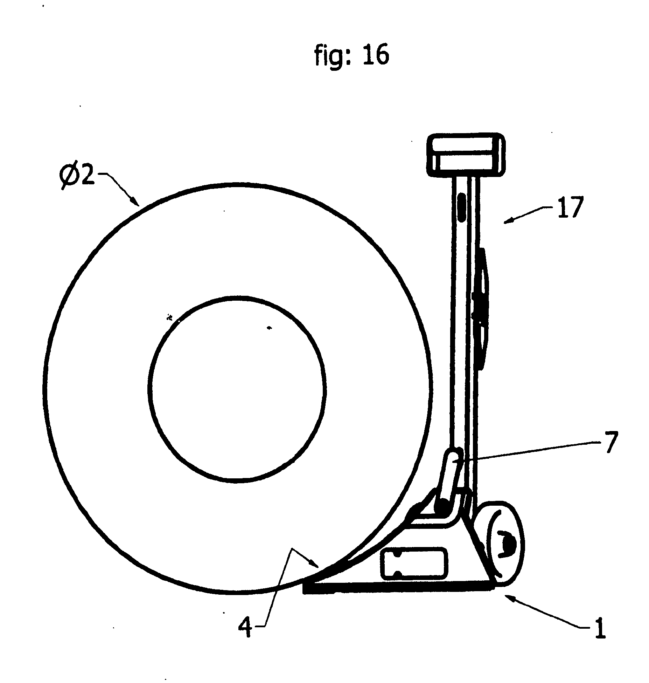

La figure 16 représente l'arrivée d'une roue 02 sur la cale 1 , le rehausseur 7 en position haute, démontrant de l'universabilitée de la cale dite universelle.

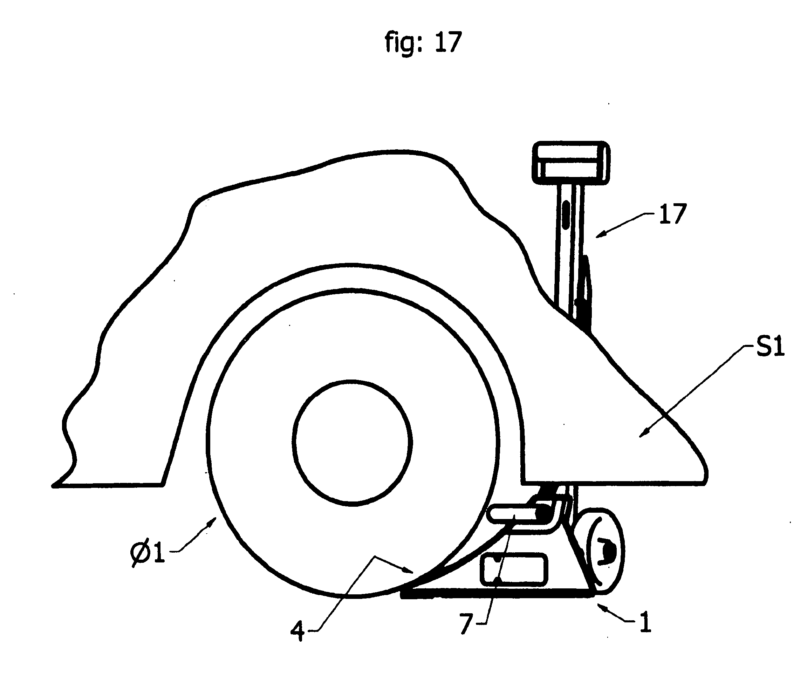

L'arrivée d'une roue de petit diamètre 0̸1 de par exemple 600 mm telle que représentée figure 17, par l'appui sur la languette 4, déclenche le moyen de détection de la roue. La roue de petit diamètre appuie sur la languette 4 avant d'arriver au contact du moyen rehausseur 7 en position basse pour cause de présence de la structure S1.

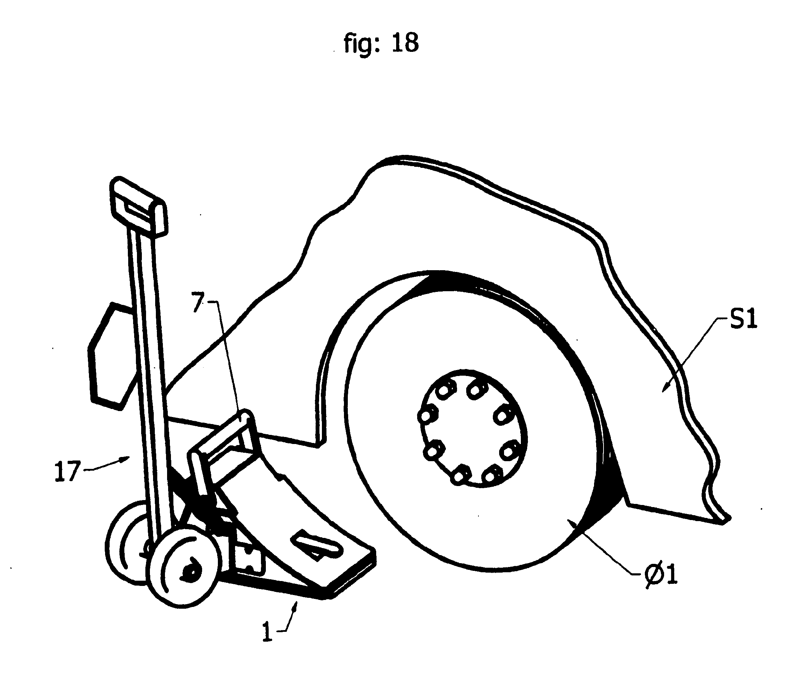

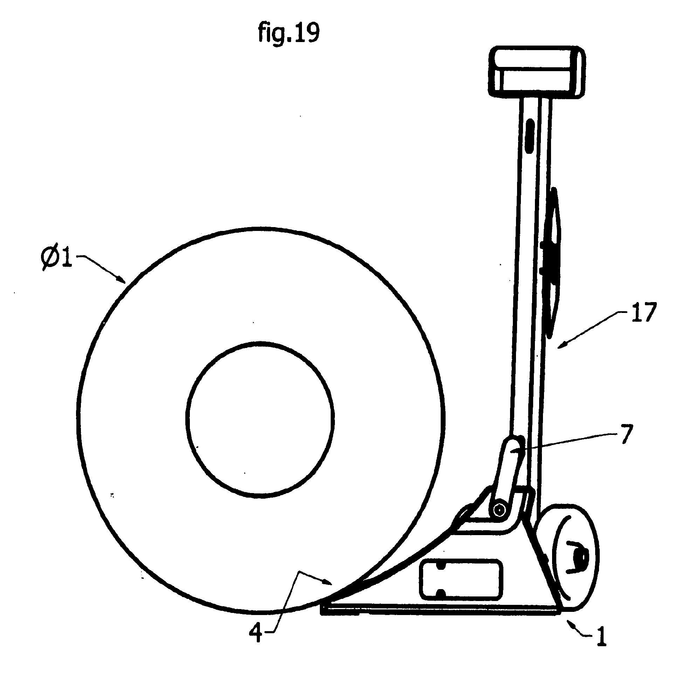

La figure 18 montre l'impossibilité de se servir de la cale 1 avec rehausseur 7 en position haute en présence d'une structure de châssis ou d'un carénage S1. Par contre la figure 19 montre l'emploi possible de la cale 1 dite universelle, rehausseur 7 en position haute sur une petite roue de 0̸1, sans carénage, démontrant une fois de plus de l'universabilité de la cale dite universelle.

Les figures 20 et 21 représente en détail le moyen de dégagement en action, aussi bien pour dégager la roue de dessous la roue d'un camion mais également pour la dégager les taquets encastrés dans la grille de retenue posée au sol.

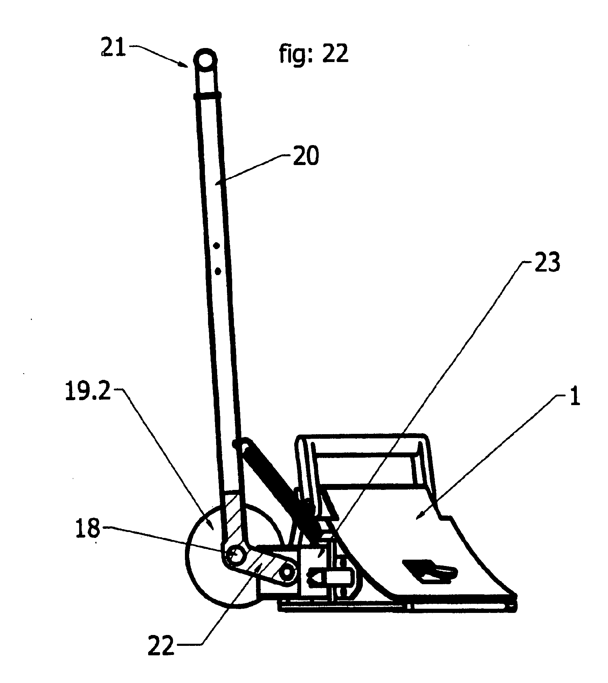

La figure 22 représente en coupe partielle détail du système de dégagement et de déplacement.

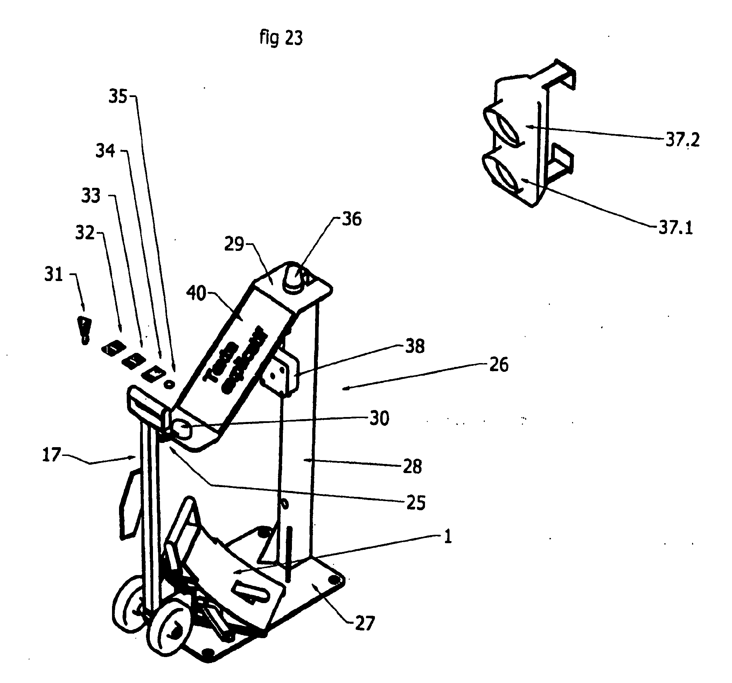

La figure 23 représente un moyen de logement 26 pour la cale universelle 1 comprenant une plaque 27 fixée au sol , un tube vertical 28, une plaque pliée 29, un moyen de retenue 30, avec différends système d'activation ou de désactivation, clé à transfert 31, carte à code barre 32, carte perforée 33, carte à puce 34, jeton 35 , sans limitation concernant d'autres moyens, un système dit prisonnier 25 fixé sur le moyen de déplacement de la cale 1, un feu orange clignotant ou non 36 , une boite à feux de signalisation déportée avec les feux 37.1 et 37.2 , une boite de raccordement électrique 38. et une plaquette explicative des procédures de calage et de décalage 40.

Le fonctionnement des cales selon l'invention à partir de leur logement sera expliqué au regard des quatre étapes représentées figure 29.

Les procédures de calage et de décalage seront déterminées suivant les contraintes propres à chaque site industriel. Ainsi, la Cale (1, 22) selon la revendication précédente, caractérisée en ce que le moyen rehausseur (7) est pivotant vers la face avant (3) de manière à ce qu'en position haute, il arrête une grande roue de camion, en position basse apte à passer sous les carénages des camions à châssis bas, il arrête les petites roues de camion et maintient les grandes roues de camions éloignée du moyen de détection annulant de fait la possibilité d'asservissement.

Bien que l'invention ait été décrite en liaison avec des structures particulières, elle n'y est nullement limitée et on peut y apporter de nombreuses variantes.

Suivant certaine variantes de réalisation du moyen de logement 26 :
- Il présente au moins un endroit de stockage et au moins un moyen de signalisation de la présence de la cale 1 ou non ; une cale 1 et son moyen de déplacement 17 pouvant être conforme à celle de décrite ci-dessus.
- Le moyen de signalisation est représenté par un moyen lumineux clignotant ou non.
- Le moyen de signalisation est représenté par un moyen acoustique.
- Il comprend au moins un moyen de verrouillage ou de retenue de la cale.
- Il comprend, en position haute, au moins un feu disposé en retrait par rapport à la face avant.
- Il comprend, une boîte à feux de signalisation déportée avec les feux 37.1 et 37.2.
- Les feux sont au moins un feu vert et/ou au moins un feu rouge.

Les combinaisons des différentes réalisations représentées sur les dessins ou décrites ci-dessus ne sortent pas du cadre de l'invention.

Signes de référence
- 1: Cale
- 2: Face inférieure
- 2.1: Plaquette caoutchoutée
- 3: Face avant
- 4: Languette métallique
- 5: Mécanisme du moyen de détection
- 6: Ouverture
- 7: Moyen rehausseur
- 8: Tube rond
- 9: Montant
- 10: Montant
- 11: Axe de pivotement
- 12: Face arrière
- 12.1: Plaque amovible
- 12.2: Vis de maintien
- 13: Face latérale
- 14: Face latérale
- 15a: Relief
- 15b: Relief
- 17: Moyen de dégagement
- 18: Axe
- 19.1: Roue
- 19.2: Roue
- 20: Tige
- 21: Poignée
- 22: crosse
- 23: Pièce de liaison avec la cale
- 24: sol
- 25: Système dit prisonnier
- 26: Moyen de logement
- 27: Plaque de sol
- 28: Tube vertical
- 29: Plaque pliée
- 30: Moyen de retenue ou de verrouillage
- 31: Clé de transfert
- 32: Carte à code barre
- 33: Carte à trous
- 34: Carte à puce
- 35: jeton
- 36: Feu orange clignotant ou non
- 37: Ensemble de feu vert et rouge
- 38: Boite de raccordement électrique
- 39: Support amovible des feux vert et rouge
- 39.1: Casquette du support amovible
- 40: Plaquette explicative des procédures de calage et de décalage

- 01: Petit diamètre de roue de 600 à 800 mm
- 02: Moyen diamètre de roue de 800 à 1000 mm
- 03: Grand diamètre de roue de 1000 à 1200 mm

- S1: Structure châssis camion
- G: Grille de retenue
- T: Taquets

Les signes de référence insérés après les caractéristiques techniques mentionnées dans les revendications ont pour seul but de faciliter la compréhension de ces dernières et n'en limitent aucunement la portée.

## Revendications

1. Cale (1, 22) de calage de camion pour transbordement de marchandises, comprenant au moins une face inférieure (2) destinée à l'appui sur le sol, une face avant (3) sensiblement concave destinée au contact en butée d'un roue de camion, une face arrière (12) et deux faces latérales (13, 14) destinées à rigidifier ladite cale et maintenir l'angle aigu formé entre la face d'appui (2) et la face avant (3),
**caractérisée en ce qu'**elle comporte un moyen de détection de roue sur sa face avant (3), typiquement un moyen de détection mécanique présentant au moins une languette métallique (4) sortant de ladite face, ledit moyen de détection étant relié à des moyens de signalétique asservis comme les feux de signalisation et autres et **en ce qu'**elle comporte au sommet un moyen rehausseur mobile (7).

2. Cale (1, 22) selon la revendication précédente, **caractérisée en ce que** le moyen rehausseur (7) est pivotant vers la face avant (3) de manière à ce qu'en position haute il arrête une grande roue de camion, en position basse apte à passer sous les carénages des camions à châssis bas, il arrête les petites roues de camion et maintient les grandes roues de camions éloignée du moyen de détection annulant de fait la possibilité d'asservissement.

3. Cale (1, 22) selon l'une des revendications précédentes, **caractérisée en ce qu'**elle comprend un moyen de dégagement (17) de la roue, ledit moyen de dégagement comprenant au moins une première tige de transmission et/ou multiplication de force reliée à une tige excentrique (18) liée à au moins une des trois faces de rigidification.

4. Cale (1, 22) selon la revendication précédente, **caractérisée en ce que** le moyen de dégagement (17) comprend des moyens de déplacement, en particulier une poignée (21) disposée à l'extrémité extérieure de la première tige (20) et/ou au moins une roue d'axe située au niveau de la liaison entre la première et la deuxième tige.

5. Cale (1,22) selon l'une quelconque des revendications 3 ou 4, en combinasion avec un moyen de logement (26) de la cale **caractérisé en ce que** le moyen de logement présente au moins un endroit de stockage et au moins un moyen de signalisation de la présence de la cale (1) ou non.

6. Combinaison selon la revendication précédente, **caractérisé en ce que** le moyen de signalisation est représenté par un moyen lumineux clignotant ou non.

7. Combinaison selon les revendications 5 ou 6, **caractérisé en ce qu'**il comprend au moins un moyen de verrouillage ou de retenue de la cale.

8. Combinaison selon l'une des revendications 5, 6 ou 7, **caractérisé en ce qu'**il peut comprendre, une boîte à feux de signalisation déportée avec les feux (37.1 et 37.2).

9. Combinaison selon la revendication précédente, **caractérisé en ce que** les feux sont au moins un feu rouge.

10. Utilisation d'une cale (1, 22) conforme à celle de l'une des revendications 1 à 4 pour le transbordement de marchandises à ou embarquées sur un camion.

## Claims

1. Lorry wheel chock (1, 22) for transferring goods, comprising at least one lower surface (2) intended to rest on the ground, one substantially concave front surface (3) intended to be in abutting contact with a lorry wheel, one rear surface (12) and two lateral surfaces (13, 14), intended to rigidify the said wheel chock and maintain the acute angle formed between the bearing surface (2) and the front surface (3),
**characterised in that** it includes a means of detecting a wheel on its front surface (3), typically a mechanical detection means comprising at least one metal tab (4) protruding from the said surface, the said detection means being connected to an interlocked signalling means such as traffic lights and **in that** it comprises at the top a mobile raising device (7).

2. Wheel chock (1, 22) as claimed in the preceding claim, **characterised in that** the raising device (7) pivots towards the front surface (3) in such a way as that in the up position, it can stop a large lorry wheel, and in the down position adapted to pass underneath the bodywork of lorries with low chassis, it can stop small truck wheels and hold large trucks wheels away from the detection means, thereby cancelling the interlocked function.

3. Wheel chock (1, 22) as claimed in one of the preceding claims, **characterised in that** it comprises a means of releasing (17) the chock from the wheel, the said release 4means comprising at least one force transmission and/or multiplication rod connected to an eccentric rod (18) connected to at least one of the three rigidifying surfaces.

4. Wheel chock (1, 22) as claimed in the preceding claim, **characterised in that** the release means (17) comprises means of movement, in particular a handle (21) provided at the outer end of the first rod (20) and/or at least one wheel with an axle situated at the connection between the first and the second rod.

5. Wheel chock (1,22) as claimed in any either of the preceding claims 3 or 4, in combination with a device (26) for storing the wheel chock **characterised in that** the storage device offers at least one storage location and at least one means of signalling the whether or not the wheel chock (1) is present.

6. Combination as claimed in the preceding claim, **characterised in that** the signalling means is represented by a light-emitting means, which may or may not flash.

7. Combination as claimed in claim 5 or claim 6, **characterised in that** it comprises at least one means of blocking or retaining the wheel chock.

8. Combination as claimed in one of claims 5, 6 or 7 **characterised in that** it may comprise a remote traffic light box with the lights (37.1 and 37.2).

9. Combination as claimed in the preceding claim **characterised in that** the lights consist at least of a red light.

10. Use of a wheel chock (1, 22) like the one described in one claims 1 to 4 for the transferring of goods onto or off a lorry.

## Patentansprüche

1. LKW-Unterlegkeil (1, 22) für das Verladen und Entladen von Waren, umfassend mindestens eine untere Fläche (2), die zur Auflage auf dem Boden bestimmt ist, eine im wesentlichen konkave vordere Fläche (3), die zum Anliegen an einem LKW-Reifen bestimmt ist, eine rückwärtige Fläche (12) und zwei Seitenflächen (13, 14), die zum Versteifen des Keils und zum Aufrechterhalten des zwischen der Auflagefläche (2) und der vorderen Fläche (3) gebildeten spitzen Winkels bestimmt sind,
**dadurch gekennzeichnet, dass**
er auf seiner vorderen Fläche (3) eine Reifendetektionseinrichtung aufweist, typischerweise eine mechanische Detektionseinrichtung mit mindestens einer aus der Fläche herausragenden Metallzunge (4), wobei die Detektionseinrichtung mit gesteuerten Signaleinrichtungen wie Signalleuchten und anderen Einrichtungen verbunden ist, und er an seiner Oberseite eine bewegliche Hochstelleinrichtung (7) aufweist.

2. Keil (1, 22) nach dem vorhergehenden Anspruch,
**dadurch gekennzeichnet, dass**
die Hochstelleinrichtung (7) zu der vorderen Fläche (3) hin schwenkbar ist, derart, dass sie in der oberen Stellung einen großen LKW-Reifen blockiert, während sie in der unteren Stellung, in der sie unter die Karosserieteile von LKWs mit niedrigem Fahrgestell passt, kleine LKW-Reifen blockiert und große LKW-Reifen von der Detektionseinrichtung fernhält, was eine Steuerung unmöglich macht.

3. Keil (1, 22) nach einem der vorhergehenden Ansprüche,
**dadurch gekennzeichnet, dass**
er eine Löseeinrichtung (17) für den Reifen umfasst, wobei die Löseeinrichtung mindestens einen ersten Stab zur Kraftübertragung und/oder -übersetzung umfasst, der mit einem exzentrischen Stab (18) verbunden ist, welcher mit mindestens einer der drei Versteifungsflächen verbunden ist.

4. Keil (1, 22) nach dem vorhergehenden Anspruch,
**dadurch gekennzeichnet, dass**
die Löseeinrichtung (17) Verschiebeeinrichtungen umfasst, insbesondere einen Griff (21), der am äußeren Ende des ersten Stabs (20) angeordnet ist, und/oder mindestens ein Rad, dessen Achse sich im Bereich der Verbindung zwischen dem ersten und dem zweiten Stab befindet.

5. Keil (1, 22) nach einem der Ansprüche 3 oder 4, in Kombination mit einer Aufnahmevorrichtung (26) für den Keil,
**dadurch gekennzeichnet, dass**
die Aufnahmevorrichtung mindestens eine Lagerstelle und mindestens eine Einrichtung zum Signalisieren der An- oder Abwesenheit des Keils (1) aufweist.

6. Kombination nach dem vorhergehenden Anspruch,
**dadurch gekennzeichnet, dass**
die Signaleinrichtung durch ein blinkendes oder nicht-blinkendes Leuchtmittel gebildet ist.

7. Kombination nach Anspruch 5 oder 6,
**dadurch gekennzeichnet, dass**
sie mindestens eine Einrichtung zum Verriegeln oder Halten des Keils umfasst.

8. Kombination nach einem der Ansprüche 5, 6 oder 7,
**dadurch gekennzeichnet, dass**
sie ein Signalleuchtengehäuse umfassen kann, das mit den Leuchten (37.1 und 37.2) mitbewegt wird.

9. Kombination nach dem vorhergehenden Anspruch,
**dadurch gekennzeichnet, dass**
mindestens eine der Leuchten eine rote Leuchte ist.

10. Verwendung eines Keils (1, 22) gemäß dem Keil nach einem der Ansprüche 1 bis 4 für das Verladen von Waren auf einen LKW oder das Entladen von Waren von einem LKW.
